# EUROPÄISCHE PATENTSCHRIFT

(11) **EP 3 513 951 B1**
(45) Veröffentlichungstag und Bekanntmachung des Hinweises auf die Patenterteilung: **21.12.2022**
(21) Anmeldenummer: 19161483.3
(22) Anmeldetag: 31.08.2017
(51) Int. Cl.: B29C 64/35, B08B 13/00, B29C 64/259, B29C 64/153, B22F 3/105, B33Y 40/00

(54) **ANLAGE ZUR ADDITIVEN HERSTELLUNG DREIDIMENSIONALER OBJEKTE**
DEVICE FOR ADDITIVE MANUFACTURING OF THREE-DIMENSIONAL OBJECTS
INSTALLATION DE FABRICATION ADDITIVE D'OBJETS TRIDIMENSIONNELS

(30) Priorität: 17.03.2017 DE 102017105819
(43) Veröffentlichungstag der Anmeldung: 24.07.2019
(62) Teilanmeldung aus: 17188873.8
(73) Patentinhaber: CL Schutzrechtsverwaltungs GmbH, 96215 Lichtenfels (DE)
(72) Erfinder: Herzog, Frank, 96215 Lichtenfels (DE)
(74) Vertreter: Hafner & Kohl PartmbB

(56) Entgegenhaltungen:
- WO-A1-2016/103686
- WO-A1-2017/050860
- DE-A1-102009 036 153

## Beschreibung

Die Erfindung betrifft eine Anlage zur additiven Herstellung dreidimensionaler Objekte.

Derartige Anlagen zur additiven Herstellung dreidimensionaler Objekte sind an und für sich bekannt. Entsprechende Anlagen umfassen u.a. Vorrichtungen zur additiven Herstellung dreidimensionaler Objekte. Vermittels entsprechenden Vorrichtungen werden die additiv herzustellenden dreidimensionalen Objekte hergestellt. Entsprechende Vorrichtungen umfassen typischerweise eine Prozesskammer, innerhalb welcher additive Bauvorgänge zur additiven Herstellung dreidimensionaler Objekte durchführbar sind. Innerhalb der Prozesskammer können verschiedene Funktionskomponenten der Vorrichtung, wie z. B. eine ein relativ zu einer Bauebene bewegbares Beschichterelement umfassende Beschichtereinrichtung, angeordnet sein.

In entsprechenden Anlagen ist der Einsatz von an die Prozesskammer andockbaren Pulvermodulen bekannt. Entsprechende Pulvermodule umfassen typischerweise eine ein Pulverkammervolumen begrenzende Pulverkammer zur Aufnahme von im Rahmen eines additiven Bauvorgangs zu verfestigendem oder nicht verfestigtem Baumaterial bzw. eines im Rahmen eines additiven Bauvorgangs herzustellenden oder hergestellten dreidimensionalen Objekts.

Entsprechende Prozesskammern - analoges gilt für innerhalb entsprechender Prozesskammern angeordnete oder ausgebildete Funktionskomponenten - können durch, insbesondere prozessbedingt entstehende, Verunreinigungen verunreinigt sein. Entsprechende Verunreinigungen können sich, z. B. durch Beeinflussung der Eigenschaften eines zur additiven Herstellung verwendeten Energiestrahls, negativ auf den Betrieb der Vorrichtung bzw. jeweiliger Funktionskomponenten auswirken.

WO 2017/050860 A offenbart eine Vorrichtung zur additiven Herstellung dreidimensionaler Objekte.

DE 10 2009 036 153 A1 offenbart eine Vorrichtung zur additiven Herstellung dreidimensionaler Objekte.

Der Erfindung liegt die Aufgabe zugrunde, eine, insbesondere im Hinblick auf eine eine flexible und praktikable Reinigungsmöglichkeit jeweiliger Prozesskammern bzw. jeweiliger in jeweiligen Prozesskammern angeordneter oder ausgebildeter Funktionskomponenten, verbesserte Anlage zur additiven Herstellung dreidimensionaler Objekte anzugeben.

Die Aufgabe wird durch eine Anlage zur additiven Herstellung dreidimensionaler Objekte gemäß Anspruch 1 gelöst. Die abhängigen Ansprüche betreffen besondere Ausführungsformen der Anlage.

Die hierin beschriebene Anlage dient im Allgemeinen der additiven bzw. generativen Herstellung dreidimensionaler Objekte d. h. beispielsweise technischer Bauteile bzw. technischer Bauteilgruppen.

Die Anlage umfasst wenigstens eine Vorrichtung (im Weiteren abgekürzt als "Vorrichtung" bezeichnet) zur additiven Herstellung wenigstens eines dreidimensionalen Objekts (im Weiteren abgekürzt als "Objekt" bezeichnet) durch sukzessive schichtweise selektive Belichtung und damit einhergehende sukzessive schichtweise selektive Verfestigung selektiv zu verfestigender Baumaterialschichten aus einem verfestigbaren Baumaterial vermittels wenigstens eines Energiestrahls. Bei dem verfestigbaren Baumaterial kann es sich um ein Metall-, Kunststoff- und/oder Keramikpulver handeln. Unter einem Metall-, Kunststoff- oder Keramikpulver kann auch ein Pulvergemisch unterschiedlicher Metalle, Kunststoffe oder Keramiken verstanden werden. Bei dem Energiestrahl kann es sich um einen Laserstrahl handeln. Bei der Vorrichtung kann es sich entsprechend um eine SLM-Vorrichtung zur Durchführung selektiver Laserschmelzverfahren (abgekürzt SLM-Verfahren) oder um eine SLS-Vorrichtung zur Durchführung selektiver Lasersinterverfahren (abgekürzt SLS-Verfahren) handeln. Bei der Anlage kann es sich entsprechend um eine Anlage zur Durchführung selektiver Laserschmelzverfahren oder um eine Anlage zur Durchführung selektiver Lasersinterverfahren handeln. Bei dem Energiestrahl kann es sich jedoch auch um einen Elektronenstrahl handeln. Denkbar ist es also auch, dass es sich bei der Anlage bzw. der Vorrichtung um eine Anlage bzw. eine Vorrichtung zur Durchführung selektiver Elektronenstrahlschmelzverfahren (abgekürzt SEBS-Verfahren) handelt.

Die sukzessive schichtweise selektive Belichtung und die damit einhergehende sukzessive schichtweise selektive Verfestigung der zur additiven Herstellung eines Objekts jeweils zu verfestigenden Baumaterialschichten erfolgt auf Grundlage von objektbezogenen Baudaten. Die Baudaten beschreiben im Allgemeinen die geometrische bzw. geometrisch-konstruktive Gestalt des additiv herzustellenden Objekts. Bei den Baudaten kann es sich beispielsweise um "geslicte" Daten des herzustellenden Objekts handeln bzw. können diese solche beinhalten.

Jede der Anlage zugehörige Vorrichtung umfasst sämtliche zur Durchführung additiver Bauprozesse typischerweise erforderlichen Funktionskomponenten. Zu entsprechenden Funktionskomponenten zählt beispielsweise eine Beschichtereinrichtung zur Ausbildung selektiv zu belichtender Baumaterialschichten in einer Bauebene und eine eine oder mehrere, z. B. als Laserstrahlerzeugungs- oder Laserstrahlablenkelemente ausgebildete oder solche umfassende, Belichtungselemente umfassende Belichtungseinrichtung zur Erzeugung eines Energiestrahls zur selektiven Belichtung einer vermittels der Beschichtereinrichtung in einer Bauebene ausgebildeten, selektiv zu belichtenden und somit selektiv zu verfestigenden Baumaterialschicht. Die Funktionskomponenten sind typischerweise in einer, gegebenenfalls auch als Maschinengehäuse zu bezeichnenden bzw. zu erachtenden, typischerweise inertisierbaren, Gehäusestruktur der Vorrichtung, d. h. insbesondere in einer, typischerweise inertisierbaren, Prozesskammer der Vorrichtung angeordnet.

Die Anlage umfasst weiterhin wenigstens ein bedarfsweise an eine Prozesskammer einer Vorrichtung andockbares, d. h. mit diesem bedarfsweise mechanisch verbindbares, Pulvermodul. Bei dem Pulvermodul kann es sich im Allgemeinen um jedwedes Pulvermodul handeln, welches zur Aufnahme und/oder Abgabe von Baumaterial und/oder zur Aufnahme eines additiv herzustellenden oder hergestellten Objekts eingerichtet ist. Im Besonderen kann es sich bei dem Pulvermodul um ein Baumodul, in welchem der eigentliche additive Aufbau dreidimensionaler Objekte erfolgt und welches hierfür im Rahmen der Durchführung additiver Herstellungsprozesse sukzessive schichtweise mit selektiv zu verfestigendem Baumaterial befüllt wird, um ein Dosiermodul, über welches im Rahmen der Durchführung additiver Herstellungsprozesse sukzessive Baumaterial in die Prozesskammer dosiert wird, oder um ein Auffang- oder Überlaufmodul, welches im Rahmen der Durchführung additiver Herstellungsprozesse sukzessive mit nicht verfestigtem Baumaterial befüllt wird, handeln. Zur Realisierung eines bedarfsweisen Andockens eines Pulvermoduls an eine Prozesskammer einer Vorrichtung sind sowohl pulvermodulseitig als auch prozesskammerseitig geeignete, insbesondere mechanische, Schnittstellen (Andockschnittstellen) vorhanden. Entsprechende Schnittstellen können z. B. als pulverkammer- bzw. prozesskammerseitige zusammenwirkende, d. h. z. B. ineinandergreifende, Führungselemente ausgebildet sein bzw. solche umfassen. Jeweilige prozesskammerseitige Schnittstellen sind typischerweise im Bereich jeweiliger prozesskammerseitiger Andockpositionen angeordnet oder ausgebildet. An entsprechenden Andockpositionen kann ein Pulvermodul und/oder ein Reinigungsmodul andocken.

Ein entsprechendes Pulvermodul umfasst eine Pulverkammer zur Aufnahme von im Rahmen eines additiven Bauvorgangs selektiv zu verfestigendem Baumaterial oder nicht verfestigtem Baumaterial und/oder eines additiv herzustellenden bzw. hergestellten Objekts. Die Pulverkammer begrenzt ein mit Baumaterial befüllbares Pulverkammervolumen. Das Pulverkammervolumen ist zumindest seitlich durch Pulverkammerwandungen der in der Regel (hohl)quaderartig bzw. (hohl)zylinderartig ausgebildeten Pulverkammer begrenzt. Bodenseitig ist das Pulverkammervolumen durch eine Bodenplatte oder eine Tragplatte einer Trageinrichtung begrenzt. Eine Tragplatte einer entsprechenden Trageinrichtung, sofern vorhanden, ist typischerweise zwischen zwei Endstellungen, d. h. zwischen einer (bezogen auf die Höhe des Pulvermoduls) oberen und einer (bezogen auf die Höhe des Pulvermoduls) unteren Endstellung, relativ zu der Pulverkammer bewegbar gelagert. Die bewegbare Lagerung der Tragplatte ermöglicht die Realisierung einer, insbesondere linearen, Bewegung der Trageinrichtung in einer vertikalen Bewegungsrichtung. Die bewegbare Lagerung der Tragplatte ist durch eine mit dieser gekoppelte Antriebseinrichtung realisiert. Die Antriebseinrichtung ist zur Ausbildung bzw. Erzeugung einer die Tragplatte in eine entsprechende Bewegung versetzenden Kraft (Antriebskraft) eingerichtet. Die Antriebseinrichtung kann z. B. (elektro)mechanisch, hydraulisch oder pneumatisch ausgebildet sein.

Im Hinblick auf die eingangs angedeutete Problematik der Verunreinigung entsprechender Prozesskammern bzw. innerhalb entsprechender Prozesskammern angeordneter oder ausgebildeter Funktionskomponenten durch, insbesondere prozessbedingt entstehende, Verunreinigungen umfasst die Anlage wenigstens ein an die Prozesskammer einer Vorrichtung andockbares bzw. ankoppelbares Reinigungsmodul. Wie erwähnt, kann das Reinigungsmodul an prozesskammerseitigen Andockpositionen andocken. Das Reinigungsmodul umfasst eine Reinigungseinrichtung, welche zur automatisierbaren oder automatisierten zumindest abschnittsweisen, insbesondere vollständigen, Reinigung der Prozesskammer oder einer innerhalb der Prozesskammer angeordneten oder ausgebildeten Funktionskomponente der Vorrichtung eingerichtet ist.

Durch das bedarfsweise Andocken eines Reinigungsmoduls an eine vorrichtungsseitige Prozesskammer und das Inbetriebnehmen einer reinigungsmodulseitigen Reinigungseinrichtung ist eine flexible und praktikable Reinigungsmöglichkeit jeweiliger Prozesskammern bzw. jeweiliger in jeweiligen Prozesskammern angeordneter oder ausgebildeter Funktionskomponenten gegeben. Unter einer Reinigung einer Prozesskammer oder einer in einer Prozesskammer angeordneten oder ausgebildeten Funktionskomponente ist insbesondere eine chemische und/oder physikalische Entfernung von prozessbedingt entstehenden Ablagerungen an den einen Prozesskammerinnenraum der Prozesskammer begrenzenden Prozesskammerwandungen und/oder an den eine äußere Gestalt einer jeweiligen Funktionskomponente definierenden, insbesondere freiliegenden, Funktionskomponentenwandungen zu verstehen bzw. beinhaltet die Reinigung eine solche.

Eine Reinigungseinrichtung kann eine Strömungseinrichtung umfassen, welche zur Erzeugung einer die Prozesskammer einer Vorrichtung zumindest abschnittsweise, insbesondere vollständig, durchströmenden und/oder eine in einer Prozesskammer einer Vorrichtung angeordnete oder ausgebildete Funktionskomponente einer Vorrichtung zumindest abschnittsweise, insbesondere vollständig, umströmenden Reinigungsströmung eingerichtet ist. Die Strömungseinrichtung ist insbesondere eingerichtet, eine Reinigungsströmung, gegebenenfalls kreislaufartig, entlang der einen Prozesskammerinnenraum einer Prozesskammer begrenzenden Prozesskammerwandungen und/oder entlang den eine äußere Gestalt einer jeweiligen Funktionskomponente definierenden, insbesondere freiliegenden, Funktionskomponentenwandungen zu führen. Zur Erzeugung einer entsprechenden Reinigungsströmung kann die Strömungseinrichtung eine Saug- und/oder Gebläseeinrichtung umfassen. Eine entsprechende Reinigungsströmung kann konkret durch ein, gegebenenfalls mit chemisch und/oder physikalisch wirkenden Reinigungssubstanzen versetztes Reinigungsfluid gebildet sein. Bei entsprechenden Reinigungssubstanzen kann es sich z. B. um (leicht) abrasive Partikel handeln. Eine Reinigungsströmung kann mit antistatischen Substanzen (Antistatika) versehen sein, um eine statische Aufladung im Rahmen eines Reinigungsvorgangs zu verhindern.

Alternativ oder ergänzend zu einer entsprechenden Strömungseinrichtung kann eine Reinigungseinrichtung eine Wischeinrichtung umfassen, welche zur Erzeugung einer Wischbewegung eines in eine Wischbewegung entlang einer zu reinigenden Fläche einer Prozesskammer und/oder einer in einer Prozesskammer angeordneten oder ausgebildeten Funktionskomponente versetzbaren Wischelements eingerichtet ist. Die Wischeinrichtung ist insbesondere eingerichtet, ein Wischelement entlang der einen Prozesskammerinnenraum einer Prozesskammer begrenzenden Prozesskammerwandungen und/oder entlang den eine äußere Gestalt einer jeweiligen Funktionskomponente definierenden, insbesondere freiliegenden, Funktionskomponentenwandungen zu führen. Ein entsprechendes Wischelement kann mit einer reinigungsaktiven, d. h. insbesondere reibaktiven, gegebenenfalls textilartigen, Oberfläche versehen sein, welche einerseits beschaffen ist, dass entsprechende Verunreinigungen von einer verunreinigten Fläche aufgenommen werden können und andererseits beschaffen ist, dass die zu reinigende Fläche nicht beschädigt wird. Ein Wischelement kann mit antistatischen Mitteln (Antistatika) versehen sein, um eine statische Aufladung im Rahmen eines Reinigungsvorgangs zu verhindern.

Die Reinigungseinrichtung kann wenigstens einen in wenigstens einem, z. B. translatorischen und/oder rotatorischen, Bewegungsfreiheitsgrad relativ zu einer zu reinigenden Fläche einer Prozesskammer und/oder einer in einer Prozesskammer angeordneten oder ausgebildeten Funktionskomponente bewegbaren Reinigungsarm umfassen. An dem Reinigungsarm kann ein einen Teil der Strömungseinrichtung und/oder der Wischeinrichtung bildendes Funktionselement angeordnet oder ausgebildet sein. Bei einem entsprechenden Funktionselement kann es sich z. B. um ein eine oder mehrere Düsen umfassendes Saug- und/oder Gebläseelement einer Strömungseinrichtung zugehörigen Saug- und/oder Gebläseeinrichtung und/oder um ein Wischelement einer Wischeinrichtung handeln. Ein entsprechender Reinigungsarm kann insbesondere zwischen einer Nichtbetriebsposition, in welcher dieser nicht über die Außenabmessungen des Reinigungsmoduls hinausragt, und einer Betriebsposition, in welcher dieser typischerweise über die Außenabmessungen des Reinigungsmoduls hinausragt, insbesondere um entsprechende zu reinigende Flächen zu erreichen, bewegt werden. Die bewegbare Lagerung des Reinigungsarms, bei welchem es sich konkret z. B. um einen Roboterarm handeln kann, ist durch eine mit diesem gekoppelte Antriebseinrichtung realisiert. Die Antriebseinrichtung ist zur Ausbildung bzw. Erzeugung einer den Reinigungsarm in eine entsprechende Bewegung versetzenden Kraft (Antriebskraft) eingerichtet. Die Antriebseinrichtung kann z. B. (elektro)mechanisch, hydraulisch oder pneumatisch ausgebildet sein.

Ein Reinigungsmodul kann - analog einem Pulvermodul - (hohl)quaderartig bzw. (hohl)zylinderartig ausgebildet sein; mithin kann ein Reinigungsmodul z. B. einen quaderartigen bzw. -förmigen Grundkörper umfassen. Insbesondere ist es möglich, dass ein Reinigungsmodul mit den gleichen Außenabmessungen wie ein Pulvermodul ausgebildet ist, sodass alle Reinigungs- und Pulvermodule der Anlage über gleiche, insbesondere standardisierte, Außenabmessungen verfügen, sodass sich alle Reinigungs- und Pulvermodule über die gleichen mechanischen Schnittstellen an eine Prozesskammer andocken lassen.

Wie erwähnt, kann das Reinigungsmodul einen, insbesondere quaderartigen oder -förmigen, Grundkörper umfassen. Die Reinigungseinrichtung kann an oder in dem Grundkörper angeordnet oder ausgebildet sein, sodass sich eine sehr kompakte Integrationsmöglichkeit der Reinigungseinrichtung in ein Reinigungsmodul ergibt.

An oder in einem Grundkörper der Reinigungseinrichtung kann ferner eine Aufnahmeeinrichtung zur Aufnahme von im Rahmen eines Reinigungsvorgangs entfernten Verunreinigungen angeordnet oder ausgebildet sein. Das Reinigungsmodul kann mithin über die Reinigungsfunktion auch eine Aufnahme- bzw. Sammelfunktion für entfernte Verunreinigungen haben, sodass sichergestellt werden kann, dass diese aus der Prozesskammer entfernt sind.

Ein Reinigungsmodul kann in der bzw. innerhalb der Anlage, insbesondere zwischen verschiedenen Vorrichtungen bzw. Arbeitsstationen der Anlage, bewegbar sein und somit bewegt werden. Zur Bewegung des Reinigungsmoduls kann dieses z. B. mit Führungen, Rädern, Rollen, etc. ausgestattet sein. Bewegungen eines Reinigungsmoduls innerhalb einer der Anlage zugehörigen (optionalen) Tunnelstruktur werden weiter unten näher erläutert. In analoger Weise ist es selbstverständlich auch denkbar, dass Pulvermodule in der bzw. innerhalb der Anlage, insbesondere zwischen verschiedenen Arbeitsstationen der Anlage, bewegbar sind und somit bewegt werden können. Bei entsprechenden Arbeitsstationen der Anlage kann es sich z. B. um durch entsprechende Vorrichtungen gebildete Bau- oder Prozessstationen, in welchen die eigentliche additive Herstellung der Objekte erfolgt, um Auspackstationen, in welchen ein "Auspacken" additiv hergestellter Objekte aus dem diese umgebenden Baumaterial erfolgt, oder um Tankstationen, in welchen ein Befüllen oder Entleeren jeweiliger Pulvermodule erfolgt, handeln.

Die Anlage kann eine Tunnelstruktur umfassen. Die Tunnelstruktur verbindet typischerweise wenigstens zwei Arbeitsstationen der Anlage miteinander. Die Tunnelstruktur weist wenigstens einen, insbesondere tunnelröhrenartigen bzw. - förmigen Tunnelabschnitt auf, in welchem bzw. durch welchen wenigstens ein Reinigungs- und/oder Pulvermodul bewegbar ist. Der Tunnelabschnitt erstreckt sich typischerweise zwischen wenigstens zwei Arbeitsstationen der Anlage. In einem jeweiligen Tunnelabschnitt ist wenigstens eine Bewegungsbahn oder -spur (im Weiteren "Bewegungsbahn"), entlang welcher ein Reinigungs- bzw. Pulvermodul durch den Tunnelabschnitt bewegbar ist, ausgebildet oder angeordnet. Selbstverständlich ist es möglich, in einem Tunnelabschnitt zumindest abschnittsweise mehrere Bewegungsbahnen, d. h. z. B. benachbart, insbesondere parallel, angeordnete Bewegungsbahnen in einer oder mehreren Ebenen, auszubilden oder anzuordnen. Eine entsprechende Bewegungsbahn kann eine geführte Bewegung eines Reinigungs- bzw. Pulvermoduls in dem bzw. durch den jeweiligen Tunnelabschnitt ermöglichen.

Die Funktion der Tunnelstruktur bzw. der dieser zugehörigen Tunnelabschnitte besteht, wie erwähnt, darin, wenigstens zwei unterschiedliche Arbeitsstationen der Anlage unmittelbar oder mittelbar, d. h. z. B. unter Zwischenschaltung wenigstens eines weiteren Tunnelabschnitts und/oder einer weiteren Arbeitsstation der Anlage, miteinander zu verbinden. Die Verbindung jeweiliger Arbeitsstationen der Anlage ermöglicht ein hin und her Bewegen jeweiliger Reinigungs- bzw. Pulvermodule zwischen jeweiligen Arbeitsstationen der Anlage. Bewegungen jeweiliger Reinigungs- bzw. Pulvermodule durch die Tunnelstruktur sind insbesondere vollautomatisiert möglich. Über einen oder mehrere Tunnelabschnitte kann z. B. eine der Anlage zugehörige Bau- oder Prozessstation mit einer der Anlage zugehörigen weitere Bau- oder Prozessstation und/oder einer der Anlage zugehörigen Auspackstation verbunden werden.

Grundsätzlich ist es möglich, dass die Bewegungsbahn, entlang welcher ein Reinigungs- bzw. Pulvermodul ausgehend von einer ersten Arbeitsstation der Anlage zurück in eine weitere Arbeitsstation der Anlage bewegt wird, gleich oder ungleich der Bewegungsbahn, entlang welcher das Reinigungs- bzw. Pulvermodul ausgehend von der ersten Arbeitsstation in die weitere Arbeitsstation bewegt wurde. Die Auswahl einer Bewegungsbahn eines Reinigungs- bzw. Pulvermoduls zwischen jeweiligen Arbeitsstationen der Anlage kann auf Grundlage bestimmter Priorisierungen bestimmter Reinigungs- bzw. Pulvermodule erfolgen. Für höher priorisierte Reinigungs- bzw. Pulvermodule können streckenmäßig kürzere bzw. schnellere Bewegungsbahnen ausgewählt werden als für niedriger priorisierte Reinigungs- bzw. Pulvermodule. Gleichermaßen können höher priorisierte Reinigungs- bzw. Pulvermodule mit einer im Vergleich zu niedriger priorisierten Pulvermodulen höheren Geschwindigkeit bewegt werden.

Zur Bewegung jeweiliger Reinigungs- bzw. Pulvermodule umfasst die Anlage wenigstens eine Fördereinrichtung. Die Fördereinrichtung kann mit einer (motorischen) Antriebseinrichtung gekoppelt sein, über welche eine wenigstens ein Reinigungs- bzw. Pulvermodul in eine Bewegung versetzende Antriebskraft erzeugbar ist.

Die Fördereinrichtung kann wenigstens ein tunnelstrukturseitig angeordnetes oder ausgebildetes Fördermittel umfassen, welches eingerichtet ist, ein Reinigungs- bzw. Pulvermodul in eine Bewegung zu versetzen. Bei einem solchen Fördermittel kann es sich z. B. um ein mechanisches Fördermittel, d. h. z. B. um einen Band-, Ketten- oder Rollenförderer, handeln, welches durch seine räumliche Erstreckung innerhalb eines jeweiligen Tunnelabschnitts eine Förderstrecke und somit eine Bewegungsbahn definiert, entlang welcher ein Reinigungs- bzw. Pulvermodul bewegbar ist. Ein entsprechendes Fördermittel kann z. B. boden-, deckenwand- oder seitenwandseitig an einer Wandung eines Tunnelabschnitts angeordnet oder ausgebildet sein.

Die oder eine Fördereinrichtung kann wenigstens ein reinigungs- bzw. pulvermodulseitig angeordnetes oder ausgebildetes Fördermittel umfassen, welches eingerichtet ist, das mit diesem ausgestattete Reinigungs- bzw. Pulvermodul in eine Bewegung zu versetzen. Bei einem solchen Fördermittel kann es sich z. B. um eine in ein jeweiliges Reinigungs- bzw. Pulvermodul integrierte (elektro)motorische Antriebseinrichtung handeln. Derart kann die Bewegungsfreiheit eines Reinigungs- bzw. Pulvermoduls gegebenenfalls erweitert werden, da z. B. Rotationsbewegungen um eine vertikale Achse möglich sind.

Die Steuerung sämtlicher Bewegungen der in der Anlage, insbesondere in der Tunnelstruktur, bewegbaren bzw. bewegten Reinigungs- bzw. Pulvermodule erfolgt über eine zentrale Steuereinrichtung, welche zweckmäßig unmittelbar oder mittelbar mit jeweiligen Reinigungs- bzw. Pulvermodulen, welche hierfür mit geeigneten, Kommunikationseinrichtungen ausgestattet sein können, z. B. funkbasiert, kommuniziert. In der zentralen Steuereinrichtung liegen zweckmäßig sämtliche für die Bewegung jeweiliger Reinigungs- bzw. Pulvermodule innerhalb der Anlage bzw. der Tunnelstruktur relevanten Informationen, d. h. insbesondere jeweilige Bewegungsinformationen, d. h. z. B. Geschwindigkeitsinformationen, jeweilige Positionsinformation, d. h. z. B. Start- und Zielinformationen, jeweilige Priorisierungsinformationen, etc. vor. Die Steuerung der Bewegungen der in der Anlage bzw. in der Tunnelstruktur bewegten Reinigungs- bzw. Pulvermodule kann vollautomatisch erfolgen.

Ein jeweiliger Tunnelabschnitt der Tunnelstruktur begrenzt wenigstens einen Hohlraum, in welchem bzw. durch welchen wenigstens ein Reinigungs- bzw. Pulvermodul bewegbar ist. Im Übrigen ist die geometrisch-konstruktive Ausgestaltung eines jeweiligen Tunnelabschnitts mit der Maßgabe, dass wenigstens ein Reinigungs- bzw. Pulvermodul in diesem bzw. durch diesen bewegbar ist, beliebig wählbar. Ein jeweiliger Tunnelabschnitt kann z. B. eine runde, rundliche oder eckige Querschnittsfläche aufweisen. Im Hinblick auf seine Längserstreckung kann ein jeweiliger Tunnelabschnitt zumindest abschnittsweise, insbesondere vollständig, geradlinig oder zumindest abschnittsweise, insbesondere vollständig, gebogen oder gekrümmt verlaufend ausgebildet sein. Selbstverständlich kann ein jeweiliger Tunnelabschnitt aus mehreren Tunnelabschnittsegmenten, welche unter Ausbildung des jeweiligen Tunnelabschnitts miteinander verbindbar oder verbunden sind, gebildet sein.

Ein jeweiliger Tunnelabschnitt kann in wenigstens einen weiteren, z. B. winklig zu diesem verlaufenden, Tunnelabschnitt münden. Die Tunnelstruktur kann - ähnlich einem aus dem Bahnverkehr bekannten Gleis- oder Schienensystem - mehrere an definierten Positionen ineinander mündende Tunnelabschnitte umfassen. Mehrere Tunnelabschnitte können zumindest abschnittsweise neben-, über- oder untereinander verlaufen. Die Tunnelstruktur kann sonach mehrere zumindest abschnittsweise neben-, über- oder untereinander, mithin in unterschiedlichen (horizontalen und/oder vertikalen) Ebenen verlaufende Tunnelabschnitte umfassen.

Ein jeweiliger Tunnelabschnitt kann inertisierbar sein, d. h. in diesem kann eine inerte Atmosphäre ausgebildet und aufrechterhalten werden. In analoger Weise kann in einem jeweiligen Tunnelabschnitt ein bestimmtes Druckniveau, d. h. z. B. ein Über- oder Unterdruck, ausgebildet und aufrechterhalten werden. Gleiches gilt für die gesamte Tunnelstruktur.

Um mit der Tunnelstruktur verbunden werden zu können, können einzelne, mehrere oder sämtliche Arbeitsstationen der Anlage einen Verbindungsabschnitt aufweisen, über welchen diese mit der Tunnelstruktur verbindbar oder verbunden sind. Beispielsweise kann eine Vorrichtung wenigstens einen Verbindungsabschnitt aufweisen, über welchen diese mit der Tunnelstruktur verbindbar oder verbunden ist. Mithin können Reinigungs- bzw. Pulvermodule über entsprechende Verbindungsabschnitte z. B. ausgehend von einer Vorrichtung in die Tunnelstruktur oder ausgehend von der Tunnelstruktur in eine Vorrichtung bewegbar sein.

Die Erfindung betrifft auch ein Reinigungsmodul für eine wie beschriebene Anlage. Sämtliche Ausführungen im Zusammenhang mit der Anlage gelten analog für das Reinigungsmodul.

Die Erfindung ist anhand von Ausführungsbeispielen in den Zeichnungsfiguren näher erläutert. Dabei zeigen:
- Fig. 1, 2: je eine Prinzipdarstellung eines Ausschnitts einer Anlage zur additiven Herstellung dreidimensionaler Objekte gemäß einem Ausführungsbeispiel; und
- Fig. 3: eine Prinzipdarstellung einer Anlage zur additiven Herstellung dreidimensionaler Objekte gemäß einem weiteren Ausführungsbeispiel.

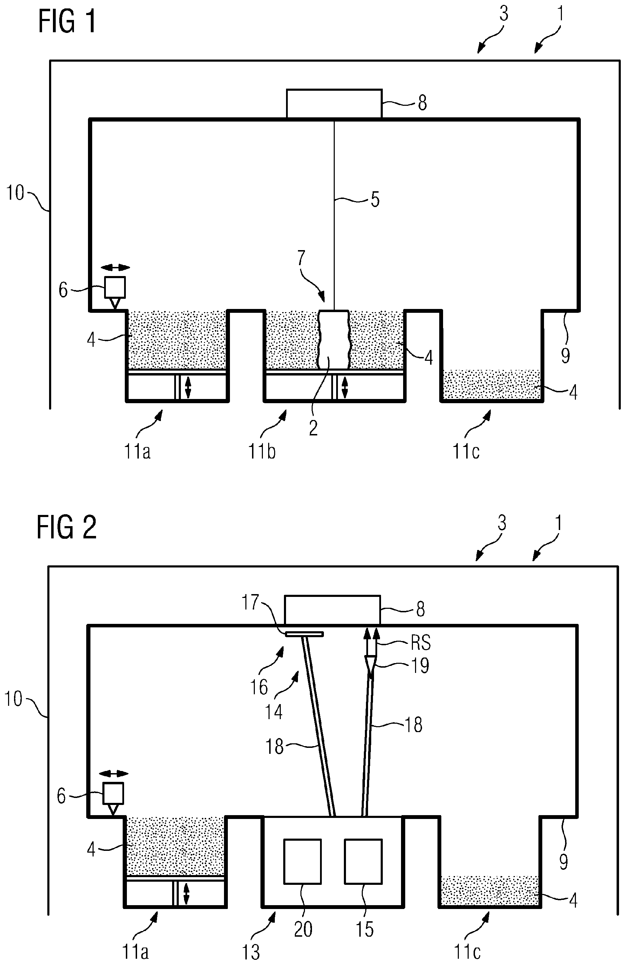

Die Fig. 1, 2 zeigen je eine Prinzipdarstellung eines Ausschnitts einer Anlage 1 zur additiven Herstellung dreidimensionaler Objekte 2, d. h. beispielsweise technischer Bauteile bzw. technischer Bauteilgruppen, gemäß einem Ausführungsbeispiel in einer schematischen Seitenansicht.

Die Anlage 1 umfasst in einer Grundkonfiguration eine Vorrichtung 3 ("Bau- oder Prozessstation") zur additiven Herstellung dreidimensionaler Objekte 2 durch sukzessive schichtweise selektive Belichtung und damit einhergehende sukzessive schichtweise selektive Verfestigung einzelner Baumaterialschichten aus einem verfestigbaren Baumaterial 4 vermittels eines Energiestrahls 5 (nähere funktionelle Details der Vorrichtung 3 ergeben sich aus Fig. 2). Bei dem verfestigbaren Baumaterial 4 kann es sich z. B. um ein Metallpulver handeln. Bei dem Energiestrahl 5 kann es sich um einen Laserstrahl handeln. Bei der Vorrichtung 3 kann es sich entsprechend um eine Vorrichtung zur Durchführung selektiver Laserschmelzverfahren (abgekürzt SLM-Verfahren) oder selektiver Lasersinterverfahren (abgekürzt SLS-Verfahren) handeln. Bei der Anlage 1 kann es sich entsprechend um eine Anlage zur Durchführung selektiver Laserschmelzverfahren (abgekürzt SLM-Verfahren) oder selektiver Lasersinterverfahren (abgekürzt SLS-Verfahren) handeln. Prinzipiell ist es jedoch auch denkbar, dass es sich bei der Anlage 1 um eine Anlage zur Durchführung selektiver Elektronenstrahlschmelzverfahren (abgekürzt SEBS-Verfahren) handeln.

Die in den Fig. gezeigten Vorrichtungen 3 umfassen jeweils sämtliche zur Durchführung additiver Bauprozesse erforderlichen Funktionskomponenten. Zu entsprechenden Funktionskomponenten zählt eine, wie durch den horizontal ausgerichteten Doppelpfeil angedeutet, bewegbar gelagerte Beschichtereinrichtung 6 zur Ausbildung selektiv zu belichtender Baumaterialschichten in einer Bauebene 7 und eine, z. B. eine oder mehrere als Laserdiodenelemente ausgebildete oder solche umfassende Belichtungselemente (nicht gezeigt) umfassende, Belichtungseinrichtung 8 zur Erzeugung eines Energiestrahls 5 zur selektiven Belichtung einer vermittels der Beschichtereinrichtung 6 in der Bauebene 7 ausgebildeten, selektiv zu belichtenden Baumaterialschicht. Die Funktionskomponenten sind in einer eine Prozesskammer 9 umfassenden Gehäusestruktur 10 der Vorrichtung 3 angeordnet. Die Prozesskammer 9 ist inertisierbar, in der Prozesskammer 9 lässt sich sonach eine Schutzgasatmosphäre, z. B. eine Argonatmosphäre, und/oder ein bestimmtes Druckniveau ausbilden und aufrechterhalten.

Die Anlage 1 umfasst mehrere Pulvermodule 11a - 11c, welche zur Aufnahme und/oder Abgabe von Baumaterial 4 eingerichtet sind. In den Fig. sind folgende Pulvermodule 11a - 11c gezeigt: ein Baumodul 11a, in welchem der eigentliche additive Aufbau dreidimensionaler Objekte 2 erfolgt und welches hierfür im Rahmen der Durchführung additiver Herstellungsprozesse sukzessive schichtweise mit selektiv zu verfestigendem Baumaterial 4 befüllt wird, ein Dosiermodul 11b, über welches im Rahmen der Durchführung additiver Herstellungsprozesse sukzessive schichtweise Baumaterial 4 in die Prozesskammer 9 dosiert wird, und ein Auffang- oder Überlaufmodul 11c, welches im Rahmen der Durchführung additiver Herstellungsprozesse mit nicht verfestigtem Baumaterial 4 befüllt wird.

Jedes Pulvermodul 11a - 11c umfasst eine Pulverkammer (nicht näher bezeichnet) zur Aufnahme von im Rahmen eines additiven Bauvorgangs selektiv zu verfestigendem Baumaterial 4 oder nicht verfestigtem Baumaterial 4 oder eines herzustellenden bzw. hergestellten Objekts 2. Eine jeweilige Pulverkammer begrenzt ein mit Baumaterial 4 befüllbares Pulverkammervolumen. Das Pulverkammervolumen ist zumindest seitlich durch Pulverkammerwandungen der in der Regel hohlquaderartig bzw. hohlzylinderartig ausgebildeten Pulverkammer begrenzt. Bodenseitig ist ein jeweiliges Pulverkammervolumen durch eine Bodenplatte (nicht bezeichnet) oder eine Tragplatte (nicht bezeichnet) einer Trageinrichtung 12a - 12c begrenzt. Eine entsprechende Tragplatte einer Trageinrichtung 12a - 12c ist typischerweise zwischen zwei Endstellungen, d. h. zwischen einer (bezogen auf die Höhe des Pulvermoduls 11a - 11c) oberen und einer (bezogen auf die Höhe des Pulvermoduls 11a - 11c) unteren Endstellung, bewegbar gelagert. Die bewegbare Lagerung der Tragplatten ermöglicht die Realisierung einer Bewegung der Tragplatten entlang einer durch den vertikalen Doppelpfeil angedeuteten vertikalen Bewegungsrichtung. Die bewegbare Lagerung der Tragplatten ist durch eine mit der jeweiligen Tragplatte gekoppelte Antriebseinrichtung (nicht näher bezeichnet) realisiert. Die Antriebseinrichtungen können z. B. (elektro)mechanisch, hydraulisch oder pneumatisch ausgebildet sein.

Die Anlage 1 umfasst neben den Pulvermodulen 11a - 11c auch ein oder mehrere, wie in Fig. 1 dargestellt, an die Prozesskammer 9 einer Vorrichtung 3 andockbare Reinigungsmodule 13.

Ein jeweiliges Reinigungsmodul 13 ist mit den gleichen Außenabmessungen wie ein Pulvermodul 11a - 11c ausgebildet, sodass alle Reinigungsmodule 13 und Pulvermodule 11a - 11c der Anlage 1 über gleiche, insbesondere standardisierte, Außenabmessungen verfügen. Mithin lassen sich alle Reinigungsmodule 13 Pulvermodule 11a - 11c über die gleichen mechanischen Schnittstellen an eine Prozesskammer 9 andocken.

Jedes Reinigungsmodul 13 umfasst eine Reinigungseinrichtung 14, welche zur automatisierbaren oder automatisierten Reinigung der Prozesskammer 9 oder einer innerhalb der Prozesskammer 9 angeordneten Funktionskomponente der Vorrichtung 3 eingerichtet ist. Unter einer Reinigung einer Prozesskammer 9 oder einer in einer Prozesskammer 9 angeordneten Funktionskomponente ist insbesondere eine chemische und/oder physikalische Entfernung von prozessbedingt entstehenden Ablagerungen an den einen Prozesskammerinnenraum der Prozesskammer 9 begrenzenden Prozesskammerwandungen (nicht bezeichnet) und/oder an den eine äußere Gestalt einer jeweiligen Funktionskomponente definierenden, insbesondere freiliegenden, Funktionskomponentenwandungen zu verstehen.

Anhand von Fig. 2, welche eine an eine Prozesskammer 9 der Vorrichtung 3 angedocktes Reinigungsmodul 13 zeigt, ist ersichtlich, dass eine Reinigungseinrichtung 14 eine Strömungseinrichtung 15 umfassen kann, welche zur Erzeugung einer die Prozesskammer 9 der Vorrichtung 3 durchströmenden bzw. eine in der Prozesskammer 9 der Vorrichtung 3 angeordnete Funktionskomponente der Vorrichtung 3 umströmenden Reinigungsströmung RS eingerichtet ist. Zur Erzeugung einer entsprechenden Reinigungsströmung RS kann die Strömungseinrichtung 15 eine Saug- und/oder Gebläseeinrichtung umfassen.

Alternativ oder ergänzend - in Fig. 2 sind insoweit beispielhaft eine Strömungseinrichtung 15 und eine Wischeinrichtung 16 dargestellt - zu der Strömungseinrichtung 15 kann eine Reinigungseinrichtung 13 eine Wischeinrichtung 16 umfassen, welche zur Erzeugung einer Wischbewegung eines in eine Wischbewegung entlang einer zu reinigenden Fläche der Prozesskammer 9 und/oder einer in der Prozesskammer 9 angeordneten Funktionskomponente versetzbaren Wischelements 17 eingerichtet ist. Das Wischelement 17 kann mit einer reinigungsaktiven, d. h. insbesondere reibaktiven, gegebenenfalls textilartigen, Oberfläche versehen sein, welche einerseits derart beschaffen ist, dass entsprechende Verunreinigungen von einer verunreinigten Fläche aufgenommen werden können und andererseits derart beschaffen ist, dass die zu reinigende Fläche nicht beschädigt wird.

Die Reinigungseinrichtung 14 umfasst mehrere in wenigstens einem, z. B. translatorischen und/oder rotatorischen, Bewegungsfreiheitsgrad bewegbare Reinigungsarme 18. An einem jeweiligen Reinigungsarm 18 ist ein einen Teil der Strömungseinrichtung 15 bzw. der Wischeinrichtung 16 bildendes Funktionselement angeordnet. Bei einem entsprechenden Funktionselement kann es sich z. B. um ein eine oder mehrere Düsen umfassendes Saug- und/oder Gebläseelement 19 einer der Strömungseinrichtung 15 zugehörigen Saug- und/oder Gebläseeinrichtung (nicht gezeigt) bzw. um das Wischelement 17 der Wischeinrichtung 16 handeln. Ein jeweiliger Reinigungsarm 18 kann insbesondere zwischen einer Nichtbetriebsposition, in welcher dieser nicht über die Außenabmessungen des Reinigungsmoduls 13 hinausragt, und einer in Fig. 2 gezeigten Betriebsposition, in welcher dieser über die Außenabmessungen des Reinigungsmoduls 13 hinausragt, insbesondere um entsprechende zu reinigende Flächen zu erreichen, bewegt werden. Die bewegbare Lagerung eines jeweiligen Reinigungsarms 18, bei welchem es sich konkret z. B. um einen Roboterarm handeln kann, ist durch eine mit diesem gekoppelte Antriebseinrichtung (nicht gezeigt) realisiert. Die Antriebseinrichtung kann z. B. (elektro)mechanisch, hydraulisch oder pneumatisch ausgebildet sein.

Ein Reinigungsmodul 13 ist - analog einem Pulvermodul 11a - 11c - (hohl)quaderartig bzw. (hohl)zylinderartig ausgebildet; mithin umfasst ein Reinigungsmodul 13 einen quaderartigen bzw. -förmigen Grundkörper. Ersichtlich ist die Reinigungseinrichtung 14 an bzw. in dem Grundkörper angeordnet. An bzw. in dem Grundkörper kann ferner eine Aufnahmeeinrichtung 20 zur Aufnahme von im Rahmen eines Reinigungsvorgangs entfernten Verunreinigungen angeordnet sein. Das Reinigungsmodul 13 hat sonach über die Reinigungsfunktion hinaus auch eine Aufnahme- bzw. Sammelfunktion für entfernte Verunreinigungen.

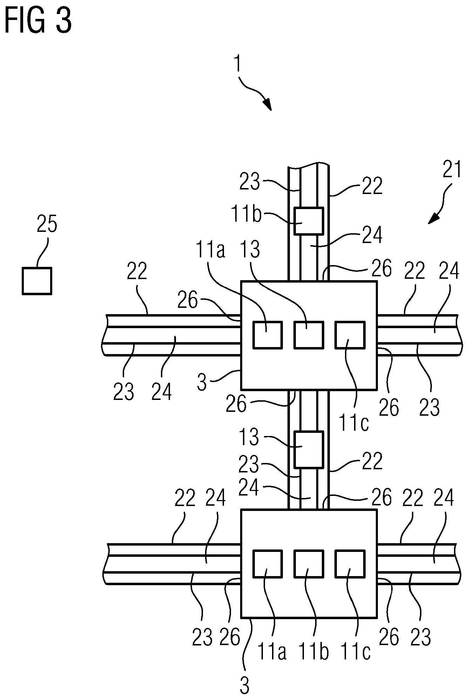

Fig. 3 zeigt eine Prinzipdarstellung einer Anlage 1 zur additiven Herstellung dreidimensionaler Objekte 2, d. h. beispielsweise technischer Bauteile bzw. technischer Bauteilgruppen, gemäß einem weiteren Ausführungsbeispiel in einer schematischen Aufsicht. Anhand von Fig. 2 ist ersichtlich, dass jeweilige Pulvermodule 11a - 11c und Reinigungsmodule 13 zwischen verschiedenen Arbeitsstationen der Anlage 1, bei welchen es sich um stationäre, d. h. nicht bewegbare, typischerweise fest mit einem Untergrund verbundene Bestandteile der Anlage 1 handelt, hin und her bewegt werden können.

Die Anlage 1 umfasst eine Tunnelstruktur 21. Die Tunnelstruktur 21 weist mehrere röhrenartige bzw. -förmige Tunnelabschnitte 22 auf, in welchen bzw. durch welche die Pulvermodule 11a - 11c und die Reinigungsmodule 13 bewegbar sind. In einem jeweiligen Tunnelabschnitt 22 ist wenigstens eine Bewegungsbahn 23, entlang welcher ein Pulvermodul 11a - 11c bzw. ein Reinigungsmodul 13 durch den Tunnelabschnitt 22 bewegbar ist, ausgebildet oder angeordnet. Eine entsprechende Bewegungsbahn 23 ermöglicht eine geführte Bewegung eines Pulvermoduls 11a - 11c bzw. eines Reinigungsmoduls 13 in dem bzw. durch den jeweiligen Tunnelabschnitt 22. Die Tunnelabschnitte 22 können inertisierbar sein, d. h. in diesen kann eine inerte Atmosphäre ein bestimmtes Druckniveau, d. h. z. B. ein Über- oder Unterdruck, ausgebildet und aufrechterhalten werden.

Die Funktion der Tunnelstruktur 21 besteht darin, unterschiedliche Arbeitsstationen der Anlage 1, d. h. z. B. Bau- oder Prozessstationen (Vorrichtungen 3), unmittelbar oder mittelbar, d. h. z. B. unter Zwischenschaltung wenigstens eines Tunnelabschnitts 22 und/oder einer weiteren Arbeitsstation der Anlage 1, miteinander zu verbinden. Die Verbindung jeweiliger Arbeitsstationen der Anlage 1 ermöglicht ein hin und her Bewegen jeweiliger Pulvermodule 11a - 11c bzw. Reinigungsmodule 13 zwischen jeweiligen Arbeitsstationen der Anlage 1. Bewegungen jeweiliger Pulvermodule 11a - 11c bzw. jeweiliger Reinigungsmodule 13 durch die Tunnelstruktur 21 sind vollautomatisiert möglich.

Zur Bewegung jeweiliger Pulvermodule 11a - 11c bzw. jeweiliger Reinigungsmodule 13 umfasst die Anlage 1 eine mit einer (motorischen) Antriebseinrichtung (nicht gezeigt) gekoppelte Fördereinrichtung 24, über welche eine ein Pulvermodul 11a - 11c bzw. ein Reinigungsmodul 13 in eine Bewegung versetzende Antriebskraft erzeugbar ist. Die Fördereinrichtung 24 kann ein tunnelstrukturseitig angeordnetes oder ausgebildetes Fördermittel (nicht gezeigt) umfassen, welches eingerichtet ist, ein Pulvermodul 11a - 11c in eine Bewegung zu versetzen. Bei dem Fördermittel kann es sich z. B. um ein mechanisches Fördermittel, d. h. z. B. um einen Band-, Ketten- oder Rollenförderer, handeln, welches durch seine räumliche Erstreckung innerhalb eines jeweiligen Tunnelabschnitts 22 eine Förderstrecke und somit die Bewegungsbahn 23 definiert, entlang welcher ein Pulvermodul 11a - 11c bzw. ein Reinigungsmodul 13 bewegbar ist.

Denkbar ist es auch, dass die Fördereinrichtung 24 pulvermodul- bzw. reinigungsmodulseitig angeordnete oder ausgebildete Fördermittel umfasst, welche eingerichtet sind, die mit diesen ausgestatteten Pulvermodule 11a - 11c bzw. Reinigungsmodule 13 in eine Bewegung zu versetzen. Bei einem solchen Fördermittel kann es sich z. B. um eine in ein jeweiliges Pulvermodul 11a - 11c bzw. ein jeweiliges Reinigungsmodul 13 integrierte (elektro)motorische Antriebseinrichtung handeln. Derart kann die Bewegungsfreiheit eines Pulvermoduls 11a - 11c bzw. eines Reinigungsmoduls 13 erweitert werden, da z. B. Rotationsbewegungen um eine vertikale Achse möglich sind.

Die Auswahl einer Bewegungsbahn eines oder mehrerer Pulvermodule 11a - 11c bzw. Reinigungsmodule 13 zwischen jeweiligen Arbeitsstationen der Anlage 1 kann auf Grundlage bestimmter Priorisierungen bestimmter Pulvermodule 11a - 11c bzw. Reinigungsmodule 13 erfolgen. Für höher priorisierte Pulvermodule 11a - 11c bzw. Reinigungsmodule 13 können streckenmäßig kürzere bzw. schnellere Bewegungsbahnen 23 ausgewählt werden als für niedriger priorisierte Pulvermodule 11a - 11c bzw. Reinigungsmodule 13. Gleichermaßen können höher priorisierte Pulvermodule 11a - 11c bzw. Reinigungsmodule 13 mit einer im Vergleich zu niedriger priorisierten Pulvermodulen 11a - 11c bzw. Reinigungsmodulen 13 höheren Geschwindigkeit bewegt werden.

Die Steuerung sämtlicher Bewegungen der in der Tunnelstruktur 21 bewegten Pulvermodule 11a - 11c bzw. Reinigungsmodule 13 erfolgt über eine zentrale Steuereinrichtung 25, welche zweckmäßig unmittelbar oder mittelbar mit jeweiligen Pulvermodulen 11a - 11c bzw. Reinigungsmodule 13, welche hierfür mit geeigneten, Kommunikationseinrichtungen (nicht näher bezeichnet) ausgestattet sein können, z. B. funkbasiert, kommuniziert. In der zentralen Steuereinrichtung 25 liegen sämtliche für die Bewegung jeweiliger Pulvermodule 11a - 11c bzw. Reinigungsmodule 13 innerhalb der Tunnelstruktur 21 relevanten Informationen, d. h. insbesondere jeweilige Bewegungsinformationen, d. h. z. B. Geschwindigkeitsinformationen, jeweilige Positionsinformationen, d. h. z. B. Start- und Zielinformationen, jeweilige Priorisierungsinformationen, etc. vor. Die Steuerung der Bewegungen der in der Tunnelstruktur 21 bewegten Pulvermodule 11a - 11c bzw. Reinigungsmodule 13 kann vollautomatisch erfolgen.

Um mit der Tunnelstruktur 21 verbunden werden zu können, weisen die Arbeitsstationen der Anlage 1 jeweils wenigstens einen Verbindungsabschnitt 26 auf, über welchen diese mit der Tunnelstruktur 21 verbindbar oder verbunden sind. Der Verbindungsabschnitt 26 stellt einen Ein- bzw. Ausgangsbereich der jeweiligen Arbeitsstationen der Anlage 1 in die Tunnelstruktur 21 und der Tunnelstruktur 21 in die jeweiligen Arbeitsstationen dar.

Wenngleich in den Fig. nicht gezeigt, können in jeweiligen Arbeitsstationen der Anlage 1, d. h. z. B. in der Vorrichtung 3, ebenso Tunnelabschnitte 22 der Tunnelstruktur 21 angeordnet oder ausgebildet sein, welche über jeweilige Verbindungsabschnitte 26 mit einem außerhalb der jeweiligen Arbeitsstation der Anlage 1 angeordneten oder ausgebildeten Tunnelabschnitt 22 kommunizieren. Die Tunnelstruktur 21 kann sich sonach (auch) durch entsprechende Arbeitsstationen der Anlage 1 erstrecken.

## Patentansprüche

1. Anlage (1) zur additiven Herstellung dreidimensionaler Objekte (2), umfassend:
- wenigstens eine Vorrichtung (3), welche zur additiven Herstellung eines dreidimensionalen Objekts (2) durch sukzessive schichtweise selektive Belichtung und damit einhergehende sukzessive schichtweise selektive Verfestigung von selektiv zu verfestigenden Baumaterialschichten vermittels eines Energiestahls (5) eingerichtet ist, wobei die Vorrichtung (3) eine Prozesskammer (9) innerhalb welcher additive Bauvorgänge zur additiven Herstellung dreidimensionaler Objekte (2) durchführbar sind, umfasst,
- wenigstens ein an die Prozesskammer (9) der wenigstens einen Vorrichtung (3) andockbares Pulvermodul (11a - 11c), welches eine ein Pulverkammervolumen begrenzende Aufnahmekammer zur Aufnahme von im Rahmen eines additiven Bauvorgangs zu verfestigendem oder nicht verfestigtem Baumaterial (4) und/oder eines im Rahmen eines additiven Bauvorgangs additiv herzustellenden oder hergestellten dreidimensionalen Objekts (2) umfasst, **gekennzeichnet durch** wenigstens ein an die Prozesskammer (9) der wenigstens einen Vorrichtung (3) andockbares Reinigungsmodul (13), welches eine Reinigungseinrichtung (14), welche zur automatisierbaren oder automatisierten zumindest abschnittsweisen, insbesondere vollständigen, Reinigung der Prozesskammer (9) oder einer innerhalb der Prozesskammer (9) angeordneten oder ausgebildeten Funktionskomponente der Vorrichtung (3) eingerichtet ist, umfasst, wobei die Reinigung der Prozesskammer (9) einer Vorrichtung (3) oder einer in der Prozesskammer (9) einer Vorrichtung (3) angeordneten oder ausgebildeten Funktionskomponente eine Entfernung von prozessbedingt entstehenden Ablagerungen an den einen Prozesskammerinnenraum der Prozesskammer (9) begrenzenden Prozesskammerwandungen und/oder an den eine äußere Gestalt einer jeweiligen Funktionskomponente definierenden, insbesondere freiliegenden, Funktionskomponentenwandungen beinhaltet.

2. Anlage nach Anspruch 1, **dadurch gekennzeichnet, dass** das Reinigungsmodul (13) einen, insbesondere quaderartigen oder -förmigen, Grundkörper umfasst, an oder in welchem die Reinigungseinrichtung (14) angeordnet oder ausgebildet ist.

3. Anlage nach einem der vorhergehenden Ansprüche, **dadurch gekennzeichnet, dass** das Reinigungsmodul (13) einen, insbesondere quaderartigen oder -förmigen, Grundkörper umfasst, an oder in welchem eine Aufnahmeeinrichtung (20) zur Aufnahme von im Rahmen eines Reinigungsvorgangs entfernten Verunreinigungen angeordnet oder ausgebildet ist.

4. Anlage nach einem der vorhergehenden Ansprüche, **dadurch gekennzeichnet, dass** das wenigstens eine Reinigungsmodul (13) innerhalb der Anlage (1), insbesondere zwischen verschiedenen Vorrichtungen (3) der Anlage (1), bewegbar ist.

5. Anlage nach einem der vorhergehenden Ansprüche, **dadurch gekennzeichnet, dass** das wenigstens eine Pulvermodul (11a - 11c) innerhalb der Anlage (1), insbesondere zwischen verschiedenen Vorrichtungen (3) der Anlage (1), bewegbar ist.

6. Anlage nach einem der vorhergehenden Ansprüche, **gekennzeichnet durch** eine Tunnelstruktur (21), welche wenigstens einen Tunnelabschnitt (22) aufweist, in welchem wenigstens ein Pulvermodul (11a - 11c) und/oder wenigstens ein Reinigungsmodul (13) bewegbar ist, wobei die wenigstens eine Vorrichtung (3) wenigstens einen Verbindungsabschnitt (26) aufweist, über welchen die Vorrichtung (3) mit der Tunnelstruktur (21) verbindbar oder verbunden ist, sodass ein Pulvermodul (11a - 11c) und/oder ein Reinigungsmodul (13) ausgehend von der Vorrichtung (3) in die Tunnelstruktur (21) oder ausgehend von der Tunnelstruktur (21) in die Vorrichtung (3) bewegbar ist.

7. Anlage nach Anspruch 6, **gekennzeichnet durch** eine Fördereinrichtung (24) zur Förderung wenigstens eines Pulvermoduls (11a - 11c) und/oder wenigstens eines Reinigungsmoduls (13) innerhalb der Tunnelstruktur (21), wobei die Fördereinrichtung (24) wenigstens ein tunnelstrukturseitig angeordnetes oder ausgebildetes Fördermittel umfasst, welches eingerichtet ist, ein Pulvermodul (11a - 11c) und/oder ein Reinigungsmodul (13) in eine Bewegung zu versetzen, und/oder wenigstens ein pulvermodul- und/oder reinigungsmodulseitig angeordnetes oder ausgebildetes Fördermittel umfasst, welches eingerichtet ist, ein Pulvermodul (11a - 11c) und/oder ein Reinigungsmodul (13) in eine Bewegung zu versetzen.

## Claims

1. Facility (1) for additive manufacture of three-dimensional objects (2), comprising
- at least one apparatus (3) which is designed for additive manufacture of a three-dimensional object (2) by successive layer-wise selective light exposure and associated successive layer-wise selective hardening of construction material layers which are to be hardened selectively by means of an energy beam (5), wherein the apparatus (3) comprises a process chamber (9) inside which additive construction processes for additive production of three-dimensional objects (2) can be carried out,
- at least one powder module (11a - 11c) which can dock onto the process chamber (9) of the at least one apparatus (3) and which comprises a receiving chamber that defines a powder chamber volume and is intended for receiving construction material (4) that is to be hardened or is not hardened, within the context of an additive construction process, and/or a three-dimensional object (2) that is to be manufactured or is manufactured additively within the context of an additive construction process, **characterised by**
at least one cleaning module (13) which can dock onto the process chamber (9) of the at least one apparatus (3) and which comprises a cleaning device (14) which is designed for automatable or automated cleaning, at least in portions, in particular completely, of the process chamber (9) or a functional component of the apparatus (3) which is arranged or formed inside the process chamber (9), wherein the cleaning of the process chamber (9) of an apparatus (3) or of a functional component arranged or formed in the process chamber of an apparatus (3) includes removal of deposits, resulting on account of the process, on the process chamber walls defining a process chamber interior of the process chamber (9), and/or on the functional component walls that define, in particular reveal, an outer shape of a relevant functional component.

2. Facility according to claim 1, **characterised in that** the cleaning module (13) comprises an in particular cube-like or cuboid main body, on or in which the cleaning device (14) is arranged or formed.

3. Facility according to either of the preceding claims, **characterised in that** the cleaning module (13) comprises an in particular cube-like or cuboid main body, on or in which a receiving device (20) for receiving impurities removed within the context of a cleaning process is arranged or formed.

4. Facility according to any of the preceding claims, **characterised in that** the at least one cleaning module (13) is movable within the facility (1), in particular between different apparatuses (3) of the facility (1).

5. Facility according to any of the preceding claims, **characterised in that** the at least one powder module (11a - 11c) is movable within the facility (1), in particular between different apparatuses (3) of the facility (1).

6. Facility according to any of the preceding claims, **characterised by** a tunnel structure (21) which comprises at least one tunnel portion (22) in which at least one powder module (11a - 11c) and/or at least one cleaning module (13) is movable, wherein the at least one apparatus (3) comprises at least one connection portion (26) via which the apparatus (3) can be or is connected to the tunnel structure (21), such that a powder module (11a - 11c) and/or a cleaning module (13) is movable from the apparatus (3) into the tunnel structure (21) or from the tunnel structure (21) into the apparatus (3).

7. Facility according to claim 6, **characterised by** a conveying device (24) for conveying at least one powder module (11a - 11c) and/or at least one cleaning module (13) within the tunnel structure (21), wherein the conveying device (24) comprises at least one conveying means arranged or formed on the tunnel structure side, which is designed to cause a powder module (11a - 11c) and/or a cleaning module (13) to move, and/or comprises at least one conveying means arranged or formed on the powder module and/or cleaning module side, which is designed to cause a powder module (11a - 11c) and/or a cleaning module (13) to move.

## Revendications

1. Installation (1) pour la fabrication additive d'objets tridimensionnels (2), comprenant :
- au moins un dispositif (3) qui est conçu pour la fabrication additive d'un objet tridimensionnel (2) par exposition sélective successive par couches et solidification sélective successive par couches l'accompagnant de couches de matériau de construction à solidifier sélectivement au moyen d'un faisceau d'énergie (5), le dispositif (3) comprenant une chambre de traitement (9) à l'intérieur de laquelle des opérations de construction additive peuvent être réalisées pour la fabrication additive d'objets tridimensionnels (2),
- au moins un module de poudre (11a - 11c) pouvant être arrimé à la chambre de traitement (9) de l'au moins un dispositif (3), lequel module de poudre comprend une chambre de réception délimitant un volume de chambre de poudre pour la réception de matériau de construction (4) à solidifier ou non solidifié dans le cadre d'une opération de construction additive et/ou d'un objet tridimensionnel (2) à fabriquer ou fabriqué par voie additive dans le cadre d'une opération de construction additive, **caractérisée par**
au moins un module de nettoyage (13) pouvant être arrimé à la chambre de traitement (9) de l'au moins un dispositif (3), lequel module de nettoyage comprend un appareil de nettoyage (14) qui est conçu pour le nettoyage automatisable ou automatisé au moins par sections, notamment complet, de la chambre de traitement (9) ou d'un composant fonctionnel du dispositif (3) agencé ou réalisé à l'intérieur de la chambre de traitement (9), le nettoyage de la chambre de traitement (9) d'un dispositif (3) ou d'un composant fonctionnel agencé ou réalisé dans la chambre de traitement (9) d'un dispositif (3) comprenant une élimination de dépôts engendrés par le traitement sur les parois de chambre de traitement délimitant un espace intérieur de chambre de traitement de la chambre de traitement (9) et/ou sur les parois de composant fonctionnel définissant une forme extérieure d'un composant fonctionnel respectif, notamment exposées.

2. Installation selon la revendication 1 , **caractérisée en ce que** le module de nettoyage (13) comprend un corps de base, notamment de type ou de forme parallélépipédique, sur ou dans lequel l'appareil de nettoyage (14) est agencé ou réalisé.

3. Installation selon l'une quelconque des revendications précédentes, **caractérisée en ce que** le module de nettoyage (13) comprend un corps de base, notamment de type ou de forme parallélépipédique, sur ou dans lequel est agencé ou réalisé un appareil de réception (20) pour la réception d'impuretés éliminées dans le cadre d'une opération de nettoyage.

4. Installation selon l'une quelconque des revendications précédentes, **caractérisée en ce que** l'au moins un module de nettoyage (13) est mobile à l'intérieur de l'installation (1), notamment entre différents dispositifs (3) de l'installation (1).

5. Installation selon l'une quelconque des revendications précédentes, **caractérisée en ce que** l'au moins un module de poudre (11a - 11c) est mobile à l'intérieur de l'installation (1), notamment entre différents dispositifs (3) de l'installation (1).

6. Installation selon l'une quelconque des revendications précédentes, **caractérisée par** une structure de tunnel (21) qui présente au moins une section de tunnel (22) dans laquelle au moins un module de poudre (11a - 11c) et/ou au moins un module de nettoyage (13) sont mobiles, l'au moins un dispositif (3) présentant au moins une section de liaison (26), par l'intermédiaire de laquelle le dispositif (3) peut être relié ou est relié à la structure de tunnel (21), de telle sorte qu'un module de poudre (11a - 11c) et/ou un module de nettoyage (13) peuvent être déplacés à partir du dispositif (3) dans la structure de tunnel (21) ou à partir de la structure de tunnel (21) dans le dispositif (3).

7. Installation selon la revendication 6, **caractérisée par** un appareil de transport (24) pour le transport d'au moins un module de poudre (11a - 11c) et/ou d'au moins un module de nettoyage (13) à l'intérieur de la structure de tunnel (21), l'appareil de transport (24) comprenant au moins un moyen de transport agencé ou réalisé du côté de la structure de tunnel, qui est conçu pour mettre en mouvement un module de poudre (11a - 11c) et/ou un module de nettoyage (13), et/ou au moins un moyen de transport agencé ou réalisé du côté du module de poudre et/ou du module de nettoyage, qui est conçu pour mettre en mouvement un module de poudre (11a - 11c) et/ou un module de nettoyage (13).
